(19) **Europäisches Patentamt / European Patent Office / Office européen des brevets**

(11) **EP 1 795 325 B1**

(12) **EUROPEAN PATENT SPECIFICATION**

(45) Date of publication and mention
of the grant of the patent:
**26.03.2014 Bulletin 2014/13**

(51) Int Cl.:
***B29C 45/66*** (2006.01)

(21) Application number: **05787721.9**

(86) International application number:
**PCT/JP2005/017699**

(22) Date of filing: **27.09.2005**

(87) International publication number:
**WO 2006/035745 (06.04.2006 Gazette 2006/14)**

(54) **MOLD CLAMPING DEVICE**

FORMKLEMMVORRICHTUNG

DISPOSITIF DE SERRAGE DE MOULE

(84) Designated Contracting States:
**AT CH DE FR GB IT LI**

(30) Priority: **27.09.2004 JP 2004279265**

(43) Date of publication of application:
**13.06.2007 Bulletin 2007/24**

(73) Proprietor: **SUMITOMO HEAVY INDUSTRIES, LTD.
Tokyo 141-6025 (JP)**

(72) Inventors:
• **TOKUI, Yousuke,
c/o SUMITOMO HEAVY INDUSTRIES LTD
Chiba-shi, Chiba 2630001 (JP)**
• **MORITANI, Kouji,
c/o SUMITOMO HEAVY INDUSTRIES LTD
Yokosuka-shi, Kanagawa 2370061 (JP)**

(74) Representative: **Wagner, Karl H.
Wagner & Geyer Partnerschaft
Patent- und Rechtsanwälte
Gewürzmühlstrasse 5
80538 München (DE)**

(56) References cited:
WO-A1-01/38069     WO-A1-92/09416
DE-A1- 3 715 161     JP-A- 61 154 822
JP-A- 61 154 823     JP-B2- 3 190 600
JP-B2- 4 034 929

• "NIEUWE MACHINES EN HULPAPPARATUUR" 1 March 1970 (1970-03-01), PLASTICA, UITGEVERSMAATSCHAPPIJ REFLEX. ROTTERDAM, NL, PAGE(S) 102/103 , XP001172731 * page 2; figure 1 *
• "NEUE VERARBEITUNGSMASCHINEN UND -GERAETE SPRITZGIESSMASCHINEN SPRITZGIESSMASCHINE MIT MIKROPROZESSOR-STEUERUNG" 1 November 1976 (1976-11-01), KUNSTSTOFFE, CARL HANSER VERLAG, MUNCHEN, DE, PAGE(S) 727 - 729 , XP001172741 ISSN: 0023-5563 * page 728; figure 4 *

EP 1 795 325 B1

## Description

TECHNICAL FIELD

The present invention relates to a mold-clamping apparatus.

BACKGROUND ART

Conventionally, a molding machine; for example, an injection molding machine, includes an injection apparatus, a mold apparatus, and a mold-clamping apparatus and produces a molded product by means of injecting resin into a cavity of the mold apparatus through an injection nozzle of the injection apparatus and solidifying the resin in the cavity. The mold apparatus includes a stationary mold and a movable mold and can perform mold closing, mold clamping, and mold opening by means of operating the mold-clamping apparatus so as to advance the movable mold toward and retreat the movable mold from the stationary mold.

The mold-clamping apparatus includes a stationary platen to which the stationary mold is attached; a movable platen to which the movable mold is attached; an electric motor; a ball screw which includes a ball screw shaft connected to an output shaft of the motor and a ball nut screw-engaged with the ball screw shaft; a crosshead connected to the ball nut; and a toggle mechanism disposed between the crosshead and the movable platen. The crosshead is advanced by driving the motor so as to extend the toggle mechanism, thereby performing mold closing and mold clamping.

However, since the thus-configured mold-clamping apparatus uses the toggle mechanism for generating a mold-clamping force, a bending moment is exerted on the movable platen, causing generation of strain on the mold-mounting surface of the movable platen.

Since mold clamping is performed by extending the toggle mechanism, controlling a mold-clamping force is difficult.

In order to cope with the above problem, there is proposed a mold-clamping apparatus which includes an electric motor and an electromagnet and which utilizes the torque of the motor for performing mold closing and mold opening, as well as the attracting force of the electromagnet for performing mold clamping (refer to, for example,

Japanese Patent No. 3190600).

In the proposed mold-clamping apparatus, a rear platen is disposed with a predetermined distance to a stationary platen therefrom, and a movable platen is disposed in a manner capable of advancing and retreating along tie bars extending between the stationary platen and the rear platen. The electromagnet is fixed on the rear end surface of the rear platen; an attraction plate is disposed rearward of the rear platen in a manner capable of advancing and retreating; a link mechanism is disposed between the attraction plate and the movable platen; and the link mechanism can be bent and extended by the motor.

Accordingly, after mold closing is performed by extending the link mechanism through driving of the motor, the electromagnet is driven so as to attract the attraction plate thereto, whereby mold clamping can be performed. In this case, since the electromagnet is used to generate a mold-clamping force, no bending moment is exerted on the movable platen, and thus no strain arises on the above-mentioned mold-mounting surface. Also, the mold-clamping force can be readily controlled.

DE 37 15 161 discloses a clamping unit for devices for injection moulding, which is operated by a linear motor. To increase the mould clamping pressure, an electromagnet is additionally provided.

JP 61 154822 discloses, for the clamping operation, a controller for a linear motor actuated by a signal of a main controller, and a linear motor driven by its output. A rod is moved to the right linearly, and a mold is moved forward to be joined to a mold thereby carrying out the clamping in the first step. Then an electromagnet is excited by the output of an electromagnet controller to attract an attracting receiving section at an end of the rod thereby effecting a prescribed powerful clamping in the second step. In this case, it is preferable that a gap is formed between the electromagnet and the attraction receiving section. With this state kept, a plasticized material is injected from the left and the right into the molds, and after the completion of cooling, the electromagnet is deenergized by the electromagnet controller, and the linear motor is driven by the linear motor controller to retract the rod, a movable platen and the mold thereby opening the molds.

WO01 38069 discloses an invention relating to a closing device in the form of an injection moulding machine for synthetic materials. Said machine comprises a stationary tool clamping plate and a moveable tool clamping plate that can be driven by means of a linear motor. At least one linear motor is connected to a power transmission element, which is connected to a lever mechanism.

PROBLEMS TO BE SOLVED BY THE INVENTION

However, in the above-mentioned conventional mold-clamping apparatus, since the link mechanism must be bent and extended so as to advance and retreat the movable platen, the dimension in the axial direction increases.

An object of the present invention is to solve the above-mentioned problem in the conventional mold-clamping apparatus and to provide a mold-clamping apparatus which can reduce the dimension in the axial direction.

MEANS FOR SOLVING THE PROBLEMS

To achieve the above object, a mold-clamping apparatus of the present invention is provided as set forth in claim 1. Preferred embodiments of the present invention may be gathered from the dependent claims.

When the drive section for mold opening and closing overlaps at least a portion of the mold-clamping-force transmission member, the dimension of the mold-clamping apparatus in the axial direction can be reduced.

BRIEF DESCRIPTION OF DRAWINGS

FIG. 1 is a view showing a first embodiment of the present invention in which a mold apparatus and a mold-clamping apparatus are in a mold-closed condition.

FIG. 2 is a view showing the first embodiment of the present invention in which the mold apparatus and the mold-clamping apparatus are in a mold-opened condition.

FIG. 3 is a sectional view taken along line X—X of FIG. 1.

FIG. 4 is a sectional view of a mold-clamping apparatus in a second embodiment of the present invention.

FIG. 5 is a view showing a first example in which a mold apparatus and a mold-clamping apparatus are in a mold-closed condition.

FIG. 6 is a view showing a second example in which a mold apparatus and a mold-clamping apparatus are in a mold-closed condition.

FIG. 7 is a view showing a third example in which a mold apparatus and a mold-clamping apparatus are in a mold-close condition.

FIG. 8 is a view showing a fourth example in which a mold apparatus and a mold-clamping apparatus are in a mold-closed condition.

FIG. 9 is a sectional view taken along line X—X of FIG. 8.

FIG. 10 is a sectional view taken along line Y-Y of FIG. 8.

FIG. 11 is a sectional view taken along line Z-Z of FIG. 8.

BEST MODE FOR CARRYING OUT THE INVENTION

Embodiments of the present invention will next be described in detail with reference to the drawings. In description of the embodiments, the terms front and rear are used as follows: in the case of a mold-clamping apparatus, front refers to a direction in which a movable platen moves at the time of mold closing, and rear refers to a direction in which the movable platen moves at the time of mold opening; and in the case of an injection apparatus, front refers to a direction in which a screw moves at the time of injection, and rear refers to a direction in which the screw moves at the time of metering.

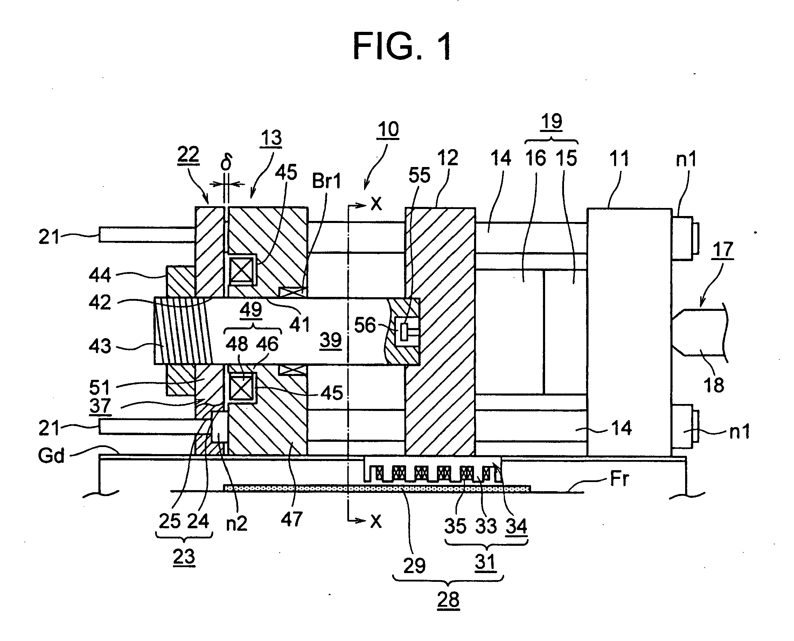

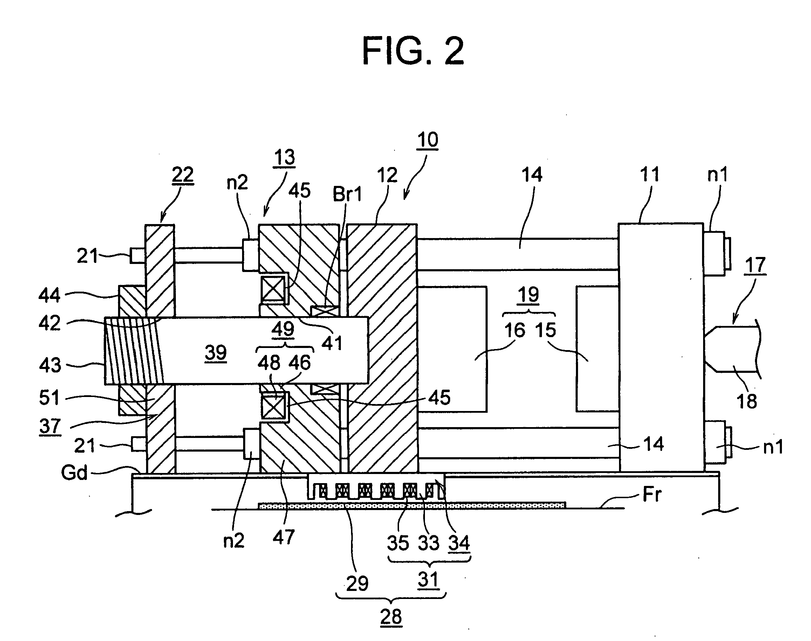

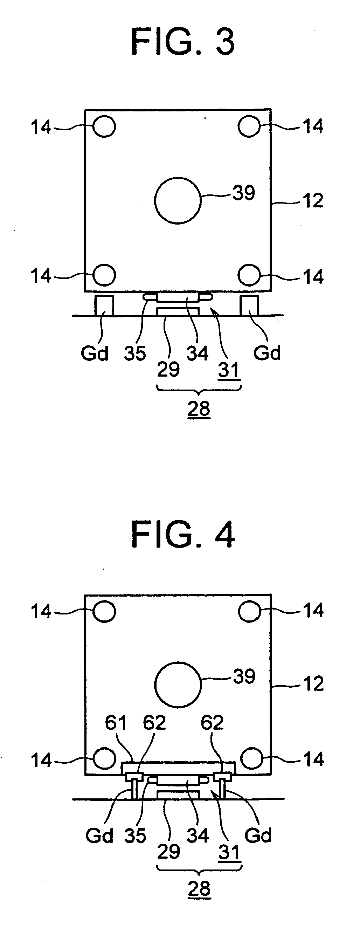

FIG. 1 is a view showing a first embodiment of the present invention in which the mold apparatus and the mold-clamping apparatus are in a mold-closed condition. FIG. 2 is a view showing the first embodiment of the present invention in which the mold apparatus and the mold-clamping apparatus are in a mold-opened condition. FIG. 3 is a sectional view taken along line X-X of FIG. 1.

In the drawings, reference numeral 10 denotes a mold-clamping apparatus; Fr denotes a frame of an injection molding machine; Gd denotes two guides (the drawings show only one of the two guides Gd) which are laid on the frame Fr and form rails, support and guide the mold-clamping apparatus 10; and reference numeral 11 denotes a stationary platen which is disposed on the guides Gd, is fixed to the frame Fr and to the guides Gd, and serves as a first stationary member. A rear platen 13 which serves as a second stationary member is disposed in opposition to the stationary platen 11 with a predetermined distance therebetween. Four tie bars 14 (the drawings show only two of the four tie bars 14) which serve as a connection member extend between the stationary platen 11 and the rear platen 13. A movable platen 12 which serves as a first movable member and also serves as a first output member is disposed in opposition to the stationary platen 11 in a manner capable of advancing and retreating (moving in the left-right direction in the drawings) along the tie bars 14, and is guided by the tie bars 14. For this advancement and retreat, unillustrated guide holes corresponding to the tie bars 14 are formed in the movable platen 12 so as to allow the tie bars 14 to extend therethrough.

An unillustrated first threaded portion is formed at a front end portion (a right end portion in the drawings) of each of the tie bars 14. The tie bars 14 are fixed to the stationary platen 11 by means of engaging nuts n1 with the corresponding first threaded portions. A guide post 21 whose diameter is smaller than that of the tie bar 14 is formed integral with a predetermined rear portion (left-hand portion in the drawings) of each of the tie bars 14. The guide posts 21 project rearward from the rear end surface (left end surface in the drawings) of the rear platen 13. An unillustrated second threaded portion is formed at a portion of each of the guide posts 21 in the vicinity of the rear end surface of the rear platen 13. The rear platen 13 is fixed to the guide posts 21 by means of engaging nuts n2 with the corresponding second threaded portions. In the present embodiment, the guide posts 21 are formed integral with the corresponding tie bars 14. However, the guide posts 21 and the tie bars 14 may be formed as separate members.

The rear platen 13 is disposed on the guides Gd such that the rear platen 13 can move slightly in relation to the guides Gd with extension and contraction of the tie bars 14. In the present embodiment, the stationary platen 11 is fixed to the frame Fr and the guides Gd, and the rear platen 13 can be moved slightly in relation to the guides Gd. However, this configuration may be modified such that the rear platen 13 is fixed to the frame Fr and the guides Gd, and the stationary platen 11 can be moved slightly in relation to the guides Gd.

A stationary mold 15 which serves as a first mold is fixed to the stationary platen 11. A movable mold 16 which serves as a second mold is fixed to the movable platen 12. The stationary mold 15 and the movable mold 16 constitute a mold apparatus 19. As the movable platen 12 advances or retreats, the movable mold 16 comes into contact with or moves away from the stationary mold 15, thereby performing mold closing, mold clamping, and mold opening.

When mold clamping is performed, an unillustrated cavity is formed between the stationary mold 15 and the movable mold 16, and an unillustrated resin which serves as a molding material is injected into the cavities from an injection nozzle 18 of an injection apparatus 17 and fills the cavities. In the present embodiment, the stationary mold 15 and the movable mold 16 form a single cavity, and a single-cavity molding is performed by the mold apparatus 19.

When the mold apparatus 19 is cooled after resin is charged into the cavity whereby the resin is cooled and solidified, mold opening is performed. At this time, an ejector device 55 disposed at the rear end surface of the movable platen 12 is operated so as to project an unillustrated ejector pin from the movable mold 16, whereby a molded product can be removed.

On the rear end surface of the rear platen 13, the attraction plate 22 which serves as a second movable member and also serves as a second output member is disposed in a manner capable of advancing and retreating along the guide posts 21 on the rear side of the rear platen 13, while being guided by the guide posts 21. Guide holes 23 corresponding to the guide posts 21 are formed in the attraction plate 22 so as to allow the guide posts 21 to extend therethrough. Each of the guide holes 23 consists of a large-diameter portion 24 which opens toward the rear platen 13 side and accommodates the corresponding ball nut n2, and a small-diameter portion 25 which opens toward the rear end surface of the attraction plate 22 and has a slide surface for allowing the corresponding guide post 21 to slide thereon. In the present embodiment, the attraction plate 22 is guided by the guide posts 21. However, the attraction plate 22 can be guided not only by the guide posts 21 but also by the guides Gd.

In order to advance and retreat the movable platen 12, a linear motor 28 which serves as a first drive section and also serves as a drive section for mold opening and closing is disposed between the movable platen 12 and the frame Fr. The linear motor 28 includes a stator 29 which serves as a first drive element and which is disposed on the frame Fr to extend in parallel with the guides Gd so as to correspond to the moving range of the movable platen 12, and a movable element 31 which serves as a second drive element and which is disposed at the lower end of the movable platen 12 to face the stator 29 and to extend over a predetermined range. Notably, the linear motor 28 has an asymmetrical structure with respect to a rod 39 which serves as a mold-clamping-force transmission member.

The movable element 31 includes a core 34 and a coil 35. The core 34 includes a plurality of magnetic-pole teeth 33 formed in such a manner as to project toward the stator 29 and to be arranged at predetermined pitch spacings. The coil 35 is wound around the magnetic-pole teeth 33. The magnetic-pole teeth 33 are formed in parallel with one another and perpendicularly to a moving direction of the movable platen 12. The stator 29 includes an unillustrated core and an unillustrated permanent magnet extending on the core. The permanent magnet is magnetized such that unillustrated N poles and S poles are arranged alternately at the same pitch spacings as those of the magnetic-pole teeth 33.

Accordingly, when the linear motor 28 is driven by means of applying a predetermined current to the coil 35, a thrust force which serves as a first output is generated, so that the movable element 31 is advanced or retreated. The thrust force is output to the movable platen 12 as a mold-opening-closing force, and the movable platen 12 is advanced or retreated, whereby mold closing or mold opening can be performed.

When Lp, Lm, and Lst represent the length of the stator 29, the length of the movable element 31, and the stroke of the movable platen 12, respectively, the length Lm is set in accordance with the maximum thrust force of the linear motor 28, and the length Lp is set so as to satisfy:

$$Lp > Lm + Lst$$

That is, in order to secure the length Lm, the movable element 31 is disposed in such a manner that its front end (right end in the drawings) projects frontward (rightward in the drawings) from the front end surface (right end surface in the drawings) of the movable platen 12 by a predetermined amount, and its rear end (left end in the drawings) projects rearward from the rear end surface of the movable platen 12 by a predetermined amount. The stator 29 is disposed in such a manner that its front end slightly projects frontward from the front end of the core 34 when the movable platen 12 and the movable mold 16 are placed in the advancement limit position, and its rear end slightly projects rearward from the rear end of the core 34 when the movable platen 12 and the movable mold 16 are placed in the retreat limit position.

In the present embodiment, the permanent magnet is disposed on the stator 29, and the coil 35 is disposed on the movable element 31. However, the following alternative is possible: the coil is disposed on the stator, and the permanent magnet is disposed on the movable element. In this case, since the coil does not move during the course of driving the linear motor 28, wiring for supplying power to the coil can be facilitated.

The tie bars 14 serve as a first guide member, the guide posts 21 serve as a second guide member, and the guides Gd serve as a third guide member. In the present embodiment, the linear motor 28 is disposed between the movable platen 12 and the frame Fr. However, the linear motor 28 may be disposed between the movable platen 12 and the guides Gd. In such a case, the guides Gd may be constructed as the first guide member.

When the movable platen 12 is advanced (moved rightward in the drawings), the movable mold 16 comes into contact with the stationary mold 15, whereby mold closing is completed. Subsequently, mold clamping is performed. In order to perform mold clamping, an electromagnet unit 37 which serves as a second drive section and also serves as a drive section for mold clamping is disposed between the rear platen 13 and the attraction plate 22.

The electromagnet unit 37 includes an electromagnet 49 which is disposed on the rear platen 13 and serves as a first drive member, and an attraction portion 51 which is disposed on the attraction plate 22 and serves as a second drive member. Two horizontally extending parallel grooves 45 are formed in respectively predetermined regions of the rear end surface of the rear platen 13, which are located slightly above and below the rod 39 in the present embodiment. Thus, a core 46 having a rectangular shape is formed at a portion of the rear platen 13 between the grooves 45, and a yoke 47 is formed at the remaining portion of the rear platen 13. A coil 48 is wound on the core 46, whereby the electromagnet 49 is formed.

The attraction portion 51 is formed in a predetermined region of the front end surface of the attraction plate 22; in the present embodiment, in a region of the attraction plate 22 which surrounds the rod 39 and faces the electromagnet 49. The core 46 and the yoke 47 of the rear platen 13, and the attraction plate 22 are formed by laminating ferromagnetic sheets and thus each assume the form of an electromagnetic steel laminate. In the present embodiment, the electromagnet 49 is formed separately from the rear platen 13, and the attraction portion 51 is formed separately from the attraction plate 22. However, the following alternative is possible: the electromagnet is formed as a portion of the rear platen 13, and the attraction portion is formed as a portion of the attraction plate 22.

Accordingly, in the electromagnet unit 37, when current is applied to the coil 48, the electromagnet 49 is driven and attracts the attraction portion 51, whereby a thrust force which serves as a second output is generated in the attraction portion 51, and is output to the attraction plate 22 as a mold-clamping force, which is transmitted to the movable platen 12.

In order to transmit the mold-opening-closing force to the attraction plate 22 to thereby advance and retreat the attraction plate 22 in an interlocking relation with advancement and retreat of the movable platen 12 during mold closing and mold opening and in order to transmit the mold-clamping force to the movable platen 12 to thereby advance he movable platen 16 during mold clamping, the above-mentioned rod 39 connects the movable platen 12 and the attraction plate 22, and is disposed in such a manner that the rod 39 can advance and retreat. The rod 39 is connected, at a rear end portion (left end portion in the drawings), to the attraction plate 22 and is connected, at a front end portion, to the movable platen 12. At the time of mold closing, with advancement of the movable platen 12, the rod 39 advances to thereby cause the attraction plate 22 to advance. At the time of mold opening, with retreat of the movable platen 12, the rod 39 retreats to thereby cause the attraction plate 22 to retreat.

In order to implement the above operation, a hole 41 is formed in a central portion of the rear platen 13 for allowing the rod 39 to extend therethrough; a hole 42 is formed in a central portion of the attraction plate 22 for allowing the rod 39 to extend therethrough; and a bearing member Br1, such as a bush, for slidably supporting the rod 39 is disposed at a front end portion of the hole 41. Threads 43 are formed at a rear end portion of the rod 39. A nut 44 which is rotatably supported by the attraction plate 22 is engaged with the threads 43.

In the present embodiment, as described above, a single cavity is formed in the mold apparatus 19, and a single-cavity molding is performed. Therefore, the cavity is formed generally at the center of the movable platen 12. Accordingly, the ejector device 55 is preferably disposed in a central portion of the rear end surface of the movable platen 12, and thus, a space 56 for accommodating the ejector device 55 is formed within the rod 39.

The stationary platen 11, the movable platen 12, the rear platen 13, the tie bars 14, the guide posts 21, the attraction plate 22, the linear motor 28, the electromagnet unit 37, the rod 39, and the like constitute the mold-clamping apparatus 10.

At the time of completion of mold closing, the attraction plate 22 is located in the vicinity of the rear platen 13 with a predetermined distance between the rear platen 13 and the attraction plate 22, whereby a predetermined gap $\delta$ is formed between the rear platen 13 and the attraction plate 22. When the gap $\delta$ is too small or too large, the attraction portion 51 fails to be sufficiently attracted; as a result, mold-clamping force becomes weak. The optimum gap $\delta$ varies with the thickness of the mold apparatus 19.

In view of the above, an unillustrated large-diameter gear is formed on the outer circumferential surface of the nut 44; an unillustrated mold-thickness-adjusting motor which serves as a third drive section and a drive section for adjusting mold thickness is disposed on the attraction plate 22; and an unillustrated small-diameter gear attached to an output shaft of the mold-thickness-adjusting motor is engaged with the gear formed on the outer circumferential surface of the nut 44.

When the mold-thickness-adjusting motor is driven so as to rotate the nut 44 by a predetermined amount in relation to the threads 43 and in accordance with the thickness of the mold apparatus 19, the position of the rod 39 in relation to the attraction plate 22 is adjusted. Thus, the position of the attraction plate 22 in relation to the stationary platen 11 and the movable platen 12 is adjusted accordingly, whereby the gap δ can be set to an optimum value set through adjustment.

The mold-thickness-adjusting motor, the gears, the nut 44, the rod 39, and the like constitute a mold-thickness-adjusting apparatus. The gears serve as a rotation transmission section for transmitting rotation of the mold-thickness-adjusting motor to the nut 44. The nut 44 and the threads 43 constitute a motion direction conversion section. The motion direction conversion section converts the rotary motion of the nut 44 to the rectilinear motion of the rod 39. In this case, the nut 44 serves as a first conversion element, and the threads 43 serve as a second conversion element.

Next, the operation of the thus-configured mold-clamping apparatus 10 will be described.

When an old mold apparatus 19 is replaced with a new mold apparatus 19, first, adjustment of mold thickness is performed; i.e., the distance between the attraction plate 22 and the movable platen 12 is changed according to the thickness of the new mold apparatus 19. In this adjustment of mold thickness, the movable mold 16 is first retreated, thereby brining the mold apparatus 19 into an opened condition. Subsequently, the linear motor 28 is driven so as to perform mold touch; i.e., the movable mold 16 is brought into contact with the stationary mold 15. At this time, clamping force is not generated. In this state, the mold-thickness-adjusting motor is driven for rotating the nut 44, so as to adjust the distance between the rear platen 13 and the attraction plate 22; i.e., the gap δ, to a predetermined value.

In this connection, in order to prevent breakage of the coil 48 even when the rear platen 13 and the attraction plate 22 come into contact with each other, the coil 48 is embedded in the rear platen 13 in such a manner as not to project from the surface of the rear platen 13. In this case, the surface of the rear platen 13 functions as a stopper for preventing damage to the coil 48. In the case where the coil 48 projects from the surface of the rear platen 13, an unillustrated contact prevention stopper is disposed between the rear platen 13 and the attraction plate 22; for example, on the surface of the rear platen 13 in opposition to the attraction plate 22 or on the surface of the attraction plate 22 in opposition to the rear platen 13, so as to prevent breakage of the coil 48 which would otherwise result from contact between the rear platen 13 and the attraction plate 22.

Subsequently, a mold-opening-closing processing means (processing section) of an unillustrated control unit performs a mold-opening-closing process. At the time of mold closing, in the state of FIG. 2, the mold-opening-closing processing means applies current to the coil 35. As a result of this operation, the linear motor 28 is driven for advancing the movable platen 12, so as to bring the movable mold 16 into contact with the stationary mold 15 as shown in FIG. 1. At this time, an optimum gap δ is formed between the rear platen 13 and the attraction plate 22; i.e., between the electromagnet 49 and the attraction portion 51. Notably, force required for mold closing is small as compared with mold-clamping force.

Subsequently, the mold-opening-closing processing means applies current to the coil 48 in the state shown in FIG. 1, whereby attraction force of the electromagnet 49 attracts the attraction portion 51. As a result of this operation, mold-clamping force is transmitted to the movable platen 12 via the attraction plate 22 and the rod 39, whereby mold clamping is performed. In this case, the above-described gap δ is maintained so as to prevent the rear platen 13 and the attraction plate 22 from contacting each other when the mold clamping is performed. Further, a contact prevention stopper or gap adjustment stopper may be disposed between the rear platen 13 and the attraction plate 22; for example, on the surface of the rear platen 13 in opposition to the attraction plate 22 or on the surface of the attraction plate 22 in opposition to the rear platen 13. Moreover, a stopper may be disposed on the frame Fr at a predetermined position between the rear platen 13 and the attraction plate 22.

The mold-clamping force is detected by an unillustrated load detector, and the detected mold-clamping force is sent to the aforementioned control unit. The control unit performs feedback control; specifically, current applied to the coil 48 is adjusted such that the mold-clamping force assumes a set value. During the course of mold clamping, a resin which is melted in the injection apparatus 17 is injected into the cavity of the mold apparatus 19 from the injection nozzle 18 and fills the cavity.

When the resin in the cavities is set, the mold-opening-closing processing means stops application of current to the coil 48. In association with this procedure, mold opening is performed; i.e., the linear motor 28 is driven such that the movable platen 12 retreats (moves leftward in the drawings), whereby the movable mold 16 and the movable platen 12 are brought to their retreat limit positions, as shown in FIG. 2, and thus, mold opening is performed.

As described above, in the present embodiment, since the movable element 31 is fixed to the movable platen 12, the thrust force generated by the linear motor 28 is transmitted directly to the movable platen 12. Therefore, the movable platen 12 can be accurately positioned, and the operability of the mold-clamping apparatus 10 can be improved. Further, an unillustrated position detector is disposed so as to detect the position of the movable element 31 of the linear motor 28, and the position of the movable platen 12 can be detected accurately by use of the position detector.

Further, since the thrust force generated by the electromagnet unit 37 is transmitted to the attraction plate 22, which is located rearward of the rear platen 13, maintenance of the electromagnet unit 37 can be readily performed.

Since no toggle mechanism is used to generate mold-clamping force, no bending moment is exerted on the movable platen 12. Thus, generation of strain on the mold-mounting surface of the movable platen 12 can be prevented.

Since the rod 39 has not only the function of transmitting mold-clamping force but also the function of adjusting mold thickness, the number of parts of the mold-clamping apparatus 10 can be reduced, thereby simplifying the structure of the mold-clamping apparatus 10 and reducing the size of the mold-clamping apparatus 10.

Further, the mold-clamping force can be readily controlled by means of adjusting current to be applied to the coil 48. In addition, since the movable platen 12 is advanced and retreated by means of supplying current to the coil 35, and the mold-clamping force is generated by means of supplying current to the coil 48, the response and stability of the mold-clamping apparatus 10 can be improved.

The mold-thickness adjustment unit is provided at a single location; i.e., there is no need to dispose the mold-thickness adjustment unit for each of the tie bars 14. Thus, the cost of the mold-clamping apparatus 10 can be reduced. Since the number of members moved in adjusting mold thickness is small, a motor having a small capacity can be used as the mold-thickness-adjusting motor. Accordingly, not only can the size of the mold-clamping apparatus 10 be reduced, but also accuracy in adjusting mold thickness can be enhanced.

Furthermore, since the movable element 31 and the rod 39 are disposed in an axially overlapping condition, the axial dimension of the mold-clamping apparatus 10 can be reduced, and thus, the size of the mold-clamping apparatus 10 can be reduced.

Since the rod 39 is disposed at a central portion of the mold-clamping apparatus 10 so as to be disposed at central portions of the movable platen 12, the rear platen 13, and the attraction plate 22, the diameter of the rod 39 can be increased. Accordingly, since the threads 43 can have a sufficiently small lead, the rod 39 is not rotated even when, at the time of transmission of mold-clamping force to the movable platen 12 via the rod 39, reaction force generated on the movable platen 12 is applied to the rod 39. As a result, there is no need to dispose a brake for preventing rotation of the rod 39, whereby the structure of the mold-thickness-adjusting apparatus can be simplified.

After mold closing is performed by driving the linear motor 28, the electromagnet unit 37 is driven for performing mold clamping. Mold clamping causes the movable platen 12 to slightly advance. At this time, the movable element 31 of the linear motor 28 is slightly advanced. However, there is no need to drive the linear motor 28 synchronously with driving of the electromagnet unit 37. What is required is to stop application of current to the coil 35 for bringing the linear motor 28 in an undriven (free) condition. Thus, control of driving of the linear motor 28 can be simplified.

There is no need to dispose a lock mechanism, such as a mechanical lock or a shutter, for advancing the movable platen 12 in association with advancement of the attraction plate 22 during the course of mold clamping. Thus, not only can the structure of the mold-clamping apparatus 10 be simplified, but also the linear motor 28 can be driven under no load at the time of mold closing and mold opening. Accordingly, at the time of mold closing and mold opening, the movable platen 12 can be moved smoothly.

In the present embodiment, the core 46 and the yoke 47 assume the form of an electromagnetic steel laminate, and the entire attraction plate 22 assumes the form of an electromagnetic steel laminate. However, a portion of the rear platen 13 around the core 46 and the attraction portion 51 of the attraction plate 22 may each assume the form of a electromagnetic steel laminate. In the present embodiment, the electromagnet 49 is formed on the rear end surface of the rear platen 13, and the attraction portion 51 is disposed on the front end surface of the attraction plate 22 in such a manner as to face the electromagnet 49. However, the following alternative is possible: the attraction portion is disposed on the rear end surface of the rear platen 13, and the electromagnet is disposed on the front end surface of the attraction plate 22 in such a manner as to face the attraction portion.

In the present embodiment, the space 56 is formed within the rod 39, and the ejector device 55 is disposed in a center portion of the rear end surface of the movable platen 12. However, in the case where a plurality of rods are used as a mold-clamping-force transmission member, the rods may be disposed around the ejector device 55. Moreover, in the case where a plurality of cavities are formed in the mold apparatus 19 for performing multi-cavity molding, it is unnecessary to dispose the ejector device 55 within the rod 39, and a plurality of ejector devices may be disposed around the rod 39.

In the present embodiment, the linear motor 28 is disposed as a first drive section. However, in place of the linear motor 28, an electric motor, a hydraulic cylinder, or the like may be disposed as the first drive section. In the case where the motor is used, a rotary motion associated with rotation generated by driving the motor is converted to a rectilinear motion by means of a ball screw which serves as a motion direction conversion section, thereby advancing and retreating the movable platen 12.

In the present embodiment, the stationary platen 11 and the rear platen 13 are disposed on the guides Gd, and the movable platen 12 is supported by the tie bars 14. However, the movable platen 12 may be supported by the tie bars 14 and the guides Gd.

Next will be described a second embodiment of the present invention in which the movable platen 12 is supported by the tie bars 14 and the guides Gd. Like structural elements of the first and second embodiments are denoted by like reference numerals, and repeated description thereof is omitted. For the effect which the second embodiment yields through employment of structural elements similar to those of the first embodiment, the effect which the first embodiment yields is applied accordingly.

FIG. 4 is a sectional view of a mold-clamping apparatus in the second embodiment of the present invention.

In this case, a linear-motor support portion 61 is disposed at the lower end of the movable platen 12 which serves as a first movable member and also severs as a first output member, and a pair of guide tables 62 are disposed on the linear-motor support portion 61 with a predetermined distance formed therebetween. The guide tables 62 are placed on the guides Gd which serve as a third guide member.

In this case, in addition to the movable platen 12 being supported and guided by the guides Gd, the movable element 31 which serves as a second drive element is supported and guided thereby. Therefore, the accuracy in terms of the clearance between the movable element 31 and the stator 29 which serves as a first drive element can be increased. Accordingly, the controllability of the linear motor 28 which serves as a drive section for mold opening and closing can be improved.

Next will be described a first example of a mold-clamping apparatus in which a linear motor is disposed between the attraction plate 22 (FIG. 1) which serves as a second output member and the frame Fr. Like structural elements of the first embodiment and the first example are denoted by like reference numerals, and repeated description thereof is omitted. For the effect which the first example yields through employment of structural elements similar to those of the first embodiment, the effect which the first embodiment yields is applied accordingly.

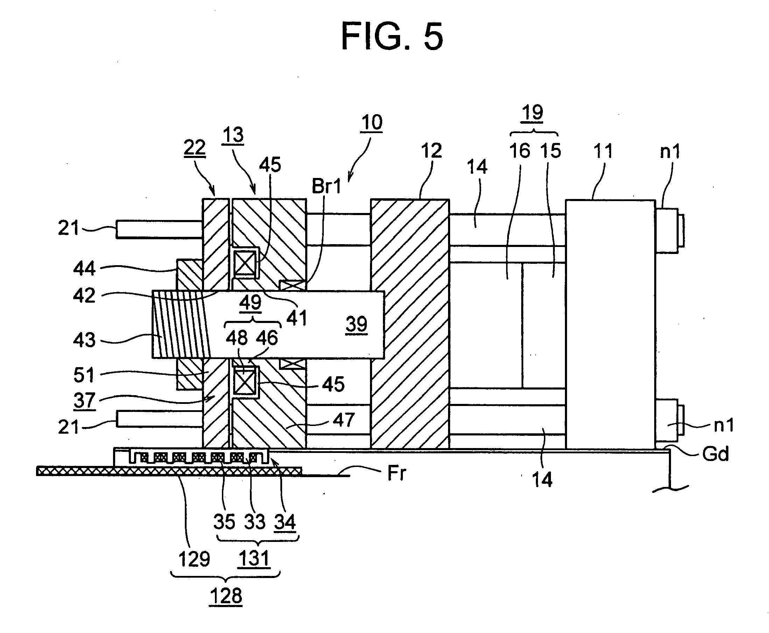

FIG. 5 is a view showing the first example in which the mold apparatus and the mold-clamping apparatus are in a mold-closed condition.

In FIG. 5, reference numeral 12 denotes a movable platen which serves as a first movable member and also serves as a first output member. The movable platen 12 is disposed in a manner capable of advancing and retreating along the tie bars 14 which serve as a connection member, while facing a stationary platen 11 which serves as a first stationary member. Reference numeral 22 is an attraction plate which serves as a second movable member and also serves as a second output member. The attraction plate 22 is disposed rearward (leftward in the drawing) of a rear platen 13 which serves as a second stationary member, in a manner capable of advancing and retreating (moving in the left-right direction in the drawing) along the guide posts 21, while being guided by the guide posts 21.

In order to advance and retreat the movable platen 12, a linear motor 128 which serves as a first drive section and also serves as a drive section for mold opening and closing is disposed between the attraction plate 22 and the rear platen 13, and the frame Fr.

The linear motor 128 includes a stator 129 which serves as a first drive element, and a movable element 131 which serves as a second drive element. The stator 129 is disposed on the frame Fr to extend in parallel with the guides Gd so as to correspond to the moving range of the movable platen 12 and the attraction plate 22. The movable element 131 is disposed at the lower end of the attraction plate 22 to face the stator 129 and to extend over a predetermined range. When Lp, Lm, and Lst represent the length of the stator 129, the length of the movable element 131, and the stroke of the movable platen 12 and the attraction plate 22, respectively, the length Lm is set in accordance with the maximum thrust force of the linear motor 128, and the length Lp is set so as to satisfy:

$$Lp > Lm + Lst$$

That is, in order to secure the length Lm, the movable element 131 is disposed in such a manner that its front end (right end in the drawing) projects frontward (rightward in the drawing) from the front end surface (right end surface in the drawing) of the attraction plate 22 by a predetermined amount, and its rear end (left end in the drawing) projects rearward from the rear end surface (left end surface in the drawing) of the attraction plate 22 by a predetermined amount. The stator 129 is disposed in such a manner that its front end slightly projects frontward from the front end of the core 34 when the movable platen 12, the attraction plate 22, and the movable mold 16 are placed in the advancement limit position, and its rear end slightly projects rearward from the rear end of the core 34 when the movable platen 12, the attraction plate 22, and the movable mold 16 are placed in the retreat limit position.

The rod 39 which serves as a mold-clamping-force transmission member is disposed while extending through the attraction plate 22 and through the rear platen 13 and while being connected, at a rear end portion (left end portion in the drawing), to the attraction plate 22 and being connected, at a front end portion (right end portion in the drawing), to the movable platen 12.

Accordingly, when, at the time of mold closing or mold opening, the linear motor 128 is driven by means of applying a predetermined current to the coil 35 of the linear motor 128, a thrust force which serves as a first output is generated, whereby the movable element 131 is advanced or retreated. Accordingly, the thrust force is output to the attraction plate 22 as mold-opening-closing force. The mold-opening-closing force is transmitted to the movable platen 12 via the rod 39, whereby the movable platen 12 is advanced or retreated; i.e., mold closing or mold opening can be performed.

In order to perform mold clamping after completion of mold closing, an electromagnet unit 37 which serves as a second drive section and also serves as a drive section for mold clamping is disposed between the rear platen 13 and the attraction plate 22. At the time of mold clamping, when the electromagnet unit 37 is driven by means of applying predetermined current to the coil 48 of the electromagnet unit 37, thrust force which serves as a second output is generated on the attraction portion 51 which serves as a second drive member. The thrust force is output to the attraction plate 22 as mold-clamping force, and the mold-clamping force is transmitted to the movable platen 12. Notably, the stationary platen 11, the movable platen 12, the rear platen 13, the tie bars 14, the guide posts 21, the attraction plate 22, the linear motor 128, the electromagnet unit 37, the rod 39, and the like constitute the mold-clamping apparatus 10.

In this case, since the movable element 131 and the rod 39 are disposed in an axially overlapping condition, the axial dimension of the mold-clamping apparatus 10 can be reduced, and thus, the size of the mold-clamping apparatus 10 can be reduced.

Since the thrust force generated by the linear motor 128 is transmitted to the movable platen 12, which is integrally connected to the attraction plate 22 via the rod 39, the movable platen 12 can be accurately positioned, and the operability of the mold-clamping apparatus 10 can be improved.

Further, since the thrust force generated by the electromagnet unit 37 is transmitted to the attraction plate 22, maintenance of the electromagnet unit 37 can be readily performed.

In the present example, the tie bars 14 serve as a first guide member, the guide posts 21 serve as a second guide member, the guides Gd serve as a third guide member, and the linear motor 128 is disposed between the attraction plate 22 and the frame Fr. However, the linear motor 128 may be disposed between the attraction plate 22 and the guides Gd. In such a case, the guides Gd may be constructed as the second guide member.

Next will be described a second example of a mold-clamping apparatus in which linear motors are disposed between the movable platen 12 and the tie bars 14. Like structural elements of the first embodiment and the second example are denoted by like reference numerals, and repeated description thereof is omitted. For the effect which the second example yields through employment of structural elements similar to those of the first embodiment, the effect which the first embodiment yields is applied accordingly.

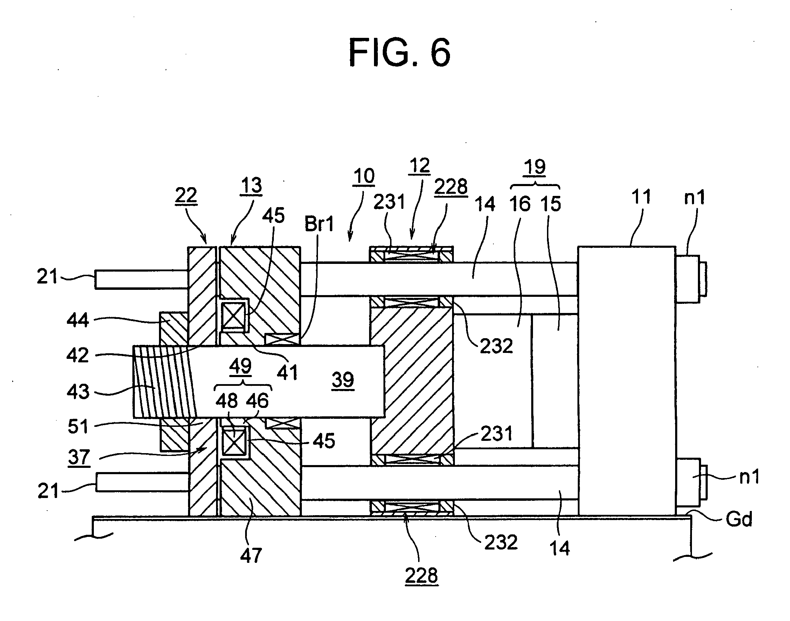

FIG. 6 is a view showing the second example in which the mold apparatus and the mold-clamping apparatus are in a mold-closed condition.

In FIG. 6, reference numeral 12 denotes a movable platen which serves as a first movable member and also serves as a first output member. The movable platen 12 is disposed in a manner capable of advancing and retreating (moving in the left-right direction in the drawing) along the tie bars 14 which serve as a connection member and also serve as a first guide member, while facing a stationary platen 11 which serves as a first stationary member. Reference numeral 22 denotes an attraction plate which serves as a second movable member and also serves as a second output member. The attraction plate 22 is disposed rearward (leftward in the drawing) of a rear platen 13 which serves as a second stationary member, in a manner capable of advancing and retreating along the guide posts 21 which serve as a second guide member, while being guided by the guide posts 21.

In this case, in order to advance and retreat the movable platen 12, linear motors 228 which serve as a first drive section and also serve as a drive section for mold opening and closing are disposed between the movable platen 12 and the tie bars 14. Guides 232 of the linear motors 228 are disposed adjacent to the linear motors 228, and the linear motors 228 and the movable platen 12 are guided by the tie bars 14. Each of the linear motors 228 includes an unillustrated stator which serves as a first drive element, and a movable element 231 which serves as a second drive element. The stator is disposed on the outer circumferential surface of each tie bar 14 so as to correspond to the moving range of the movable platen 12. The movable element 231 is disposed on an inner circumferential surface of each guide hole formed in the movable platen 12 for guiding the corresponding tie bar 14 in such a manner that the movable element 231 faces the stator. Notably, the stationary platen 11, the movable platen 12, the rear platen 13, the tie bars 14, the guide posts 21, the attraction plate 22, the linear motors 228, the electromagnet unit 37 (serving as a second drive section and a drive section for mold clamping), the rod 39 (serving as a mold-clamping-force transmission member), and the like constitute the mold-clamping apparatus 10.

Accordingly, when the linear motors 228 are driven through supply of predetermined current to unillustrated coils of the linear motors 228, the movable elements 231 are advanced or retreated, whereby the movable platen 12 is advanced or retreated so as to perform mold closing or mold opening.

Further, since the linear motors 228 and the rod 39 are disposed in an axially overlapping condition, the axial dimension of the mold-clamping apparatus 10 can be reduced, and thus, the size of the mold-clamping apparatus 10 can be reduced.

Since the thrust force generated by the linear motors 228 and serving as a first output is transmitted directly to the movable platen 12, the movable platen 12 can be accurately positioned, and the operability of the mold-clamping apparatus 10 can be improved. The above-described position detector is disposed so as to detect the position of the movable elements 231 of the linear motors 228. Therefore, the position of the movable platen 12 can be detected accurately by use of the position detector.

Further, since the thrust force generated by the electromagnet unit 37 and serving as a second output is transmitted to the attraction plate 22, which is located rearward of the rear platen 13, maintenance of the electromagnet unit 37 can be readily performed.

Next will be described a third example of a mold-clamping apparatus in which linear motors are disposed between the attraction plate 22 and the guide posts 21. Like structural elements of the first embodiment and the third example are denoted by like reference numerals, and repeated description thereof is omitted. For the effect which the third example yields through employment of structural elements similar to those of the first embodiment, the effect which the first embodiment yields is applied accordingly.

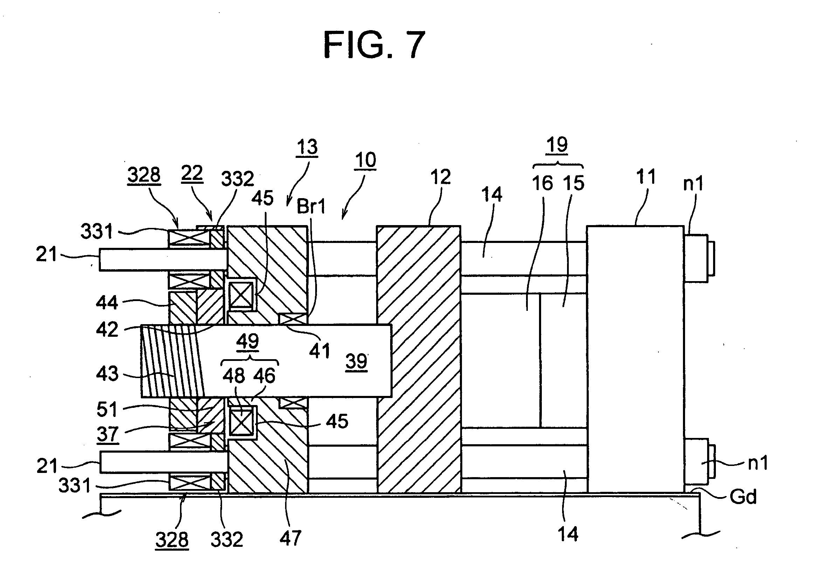

FIG. 7 is a view showing the third example in which the mold apparatus and the mold-clamping apparatus are in a mold-closed condition.

In FIG. 7, reference numeral 12 denotes a movable platen which serves as a first movable member and also serves as a first output member. The movable platen 12 is disposed in a manner capable of advancing and retreating (moving in the left-right direction in the drawing) along the tie bars 14 which serve as a connection member and also serve as a first guide member, while facing a stationary platen 11 which serves as a first stationary member. Reference numeral 22 denotes an attraction plate which serves as a second movable member and also serves as a second output member. The attraction plate 22 is disposed rearward (leftward in the drawing) of a rear platen 13 which serves as a second stationary member, in a manner capable of advancing and retreating along the guide posts 21 which serve as a second guide member, while being guided by the guide posts 21.

In order to advance and retreat the movable platen 12, linear motors 328 which serve as a first drive section and also serve as a drive section for mold opening and closing are disposed between the attraction plate 22 and the guide posts 21. Guides 332 of the linear motors 328 are disposed adjacent to the linear motors 328, and the linear motors 328 and the attraction plate 22 are guided by the guide posts 21. Each of the linear motors 328 includes an unillustrated stator which serves as a first drive element, and a movable element 331 which serves as a second drive element. The stator is disposed on the outer circumferential surface of each guide post 21 so as to correspond to the moving range of the movable platen 12 and the attraction plate 22. The movable element 331 is disposed on an inner circumferential surface of each guide hole formed in the attraction plate 22 for guiding the corresponding guide post 21 in such a manner that the movable element 331 faces the stator, and projects rearward from the attraction plate 22.

Further, a rod 39 which serves as a mold-clamping-force transmission member is disposed to pass through the attraction plate 22 and the rear platen 13. The rod 39 is connected, at a rear end portion (left end portion in the drawing), to the attraction plate 22 and is connected, at a front end portion (right end portion in the drawing), to the movable platen 12.

Accordingly, when the linear motors 328 are driven at the time of mold closing or mold opening through supply of predetermined current to unillustrated coils of the linear motors 328, a thrust force which serves as a first output is generated, so that the movable element 331 is advanced or retreated. The thrust force is output to the attraction plate 22 as a mold-opening-closing force. The mold-opening-closing force is transmitted to the movable platen 12 via the rod 39, so that the movable platen 12 is advanced or retreated, whereby mold closing or mold opening can be performed.

Notably, the stationary platen 11, the movable platen 12, the rear platen 13, the tie bars 14, the guide posts 21, the attraction plate 22, the linear motors 328, the electromagnet unit 37 (serving as a second drive section and a drive section for mold clamping), the rod 39, and the like constitute the mold-clamping apparatus 10.

In this case, since the linear motors 328 and the rod 39 are disposed in an axially overlapping condition, the axial dimension of the mold-clamping apparatus 10 can be reduced, and thus, the size of the mold-clamping apparatus 10 can be reduced.

Since the thrust force generated by the linear motors 328 is transmitted to the movable platen 12 integrally connected to the attraction plate 22 via the rod 39, the movable platen 12 can be accurately positioned, and the operability of the mold-clamping apparatus 10 can be improved.

Further, since the thrust force generated by the electromagnet unit 37 and serving as a second output is transmitted to the attraction plate 22, which is located rearward of the rear platen 13, maintenance of the electromagnet unit 37 can be readily performed.

Next will be described a fourth example of a mold-clamping apparatus in which a slide base is disposed between the attraction plate 22 and the linear motor 128. Like structural elements of the first and fourth examples are denoted by like reference numerals, and repeated description thereof is omitted. For the effect which the fourth example yields through employment of structural elements similar to those of the first example, the effect which the first example yields is applied accordingly.

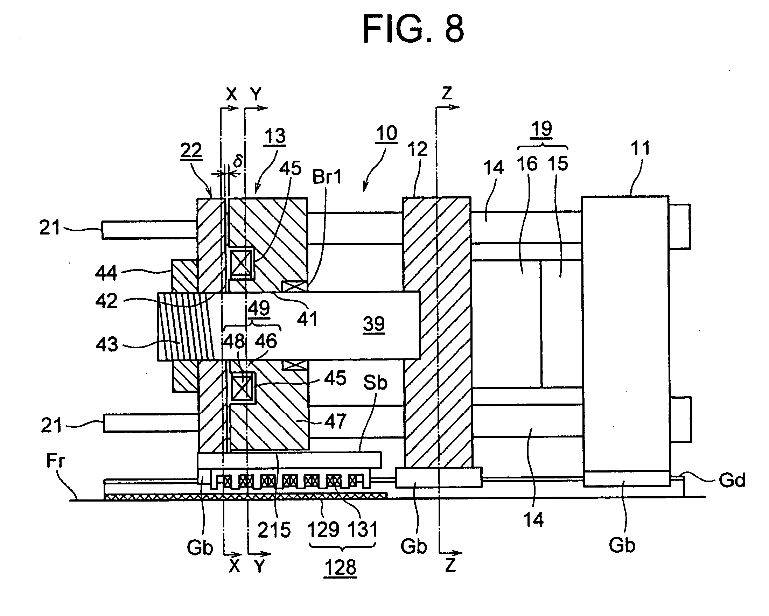

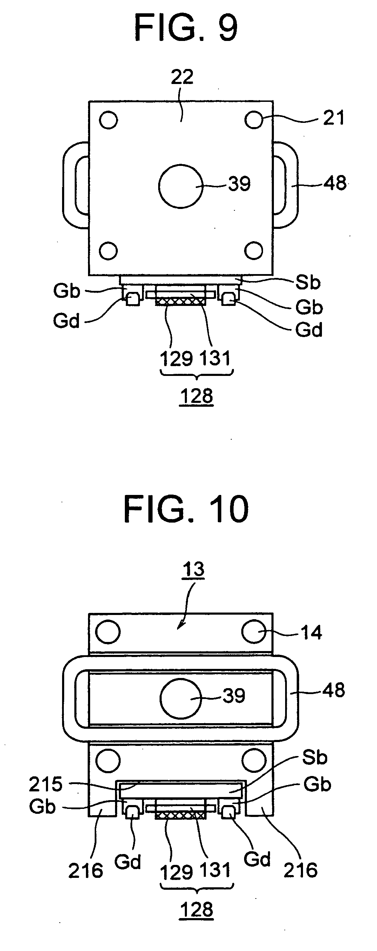

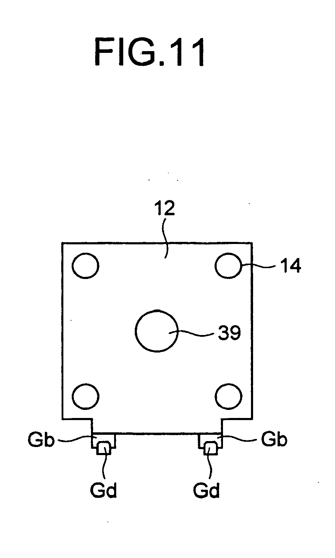

FIG. 8 is a view showing the fourth example in which the mold apparatus and the mold-clamping apparatus are in a mold-closed condition. FIG. 9 is a sectional view taken along line X-X of FIG. 8. FIG. 10 is a sectional view taken along line Y-Y of FIG. 8. FIG. 11 is a sectional view taken along line Z-Z of FIG. 8.

In this case, the stationary platen 11 which serves as a first stationary member, the movable platen 12 which serves as a first movable member, and the attraction plate 22 which serves as a second movable member are disposed on the guides Gd which serve as a guide member, via guide blocks Gb which serve as a member to be guided, whereas the rear platen 13 which serves as a second stationary member is fixed to the frame Fr. Accordingly in association with extension and contraction of the tie bars 14 which serve as a connection member, the stationary platen 11 slightly moves in relation to the guides Gd.

The linear motor 128 which serves as a first drive section and also serves as a drive section for mold opening and closing is disposed between the attraction plate 22 and the frame Fr. The movable element 131 which serves as a second drive element is attached to the lower end of the attraction plate 22 via the slide base Sb which serves as a movable-member support section and also serves as a thrust-force transmission section. The slide base Sb extends frontward in the longitudinal direction while covering the upper surface of the movable element 131. Accordingly, a space 215 is formed at the lower end of the rear platen 13 in such a surrounding manner as to allow the linear motor 128, the guides Gd, the guide blocks Gb, the slide base Sb, and the like to extend therethrough. As a result, the rear platen 13 is fixed to the frame Fr via leg portions 216 located on the opposite sides of the space 215.

In this case, at the time of mold closing, thrust force generated by the linear motor 128 is transmitted to the slide base Sb and the attraction plate 22 and then to the movable platen 12 which is unitarily connected to the attraction plate 22 via the rod 39 which serves a mold-clamping-force transmission member, thereby pressing the center of the movable platen 12. Thus, no inclination is formed on the movable platen 12. Therefore, when mold clamping is performed, the movable mold 16 can be pressed with uniform mold-clamping force.

The lower end of the attraction plate 22 and the rear end of the slide base Sb are joined together in a sufficiently firm condition, whereby the attraction plate 22 and the slide base Sb constitute a thrust-force transmission unit which has a shape resembling the letter "L" and functions as a rigid body. Accordingly, when, at the time of mold closing, thrust force generated by the linear motor 128 is transmitted to the attraction plate 22 via the slide base Sb and then to the rod 39, formation of inclination of the attraction plate 22 can be prevented. As a result, the thrust force can be smoothly transmitted to the movable platen 12 via the rod 39.

INDUSTRIAL APPLICABILITY

The present invention can be applied to a mold-clamping apparatus of an injection molding machine.

**Claims**

1. A mold-clamping apparatus (10) comprising:

(a) a first stationary member (11) to which a stationary mold (15) is attached;

(b) a second stationary member (13) disposed in opposition to the first stationary member (11);
(c) a first movable member (12) disposed in opposition to the first stationary member (11) and to which a movable mold (16) is attached;
(d) a second movable member (22) which is adapted to be advanced and retreated in association with advancement and retreat of the first movable member (12);
(e) a drive section for mold clamping (37) which is an electromagnet and is adapted to generate a mold-clamping force between the second stationary member (13) and the second movable member (22);
(f) a mold-clamping force transmission member (39) connecting the first and second movable members, and
(g) a linear motor (28), wherein the linear motor (28) overlaps at least a portion of the mold-clamping-force transmission member (39);

said mold-clamping apparatus being **characterized in that**:

the linear motor (28) comprises a stator (29) disposed on a frame (FR) to extend in parallel with guides (Gd), and a movable element (31) disposed at the lower end of the first movable member (12) to face the stator (29),
the linear motor (28) being adapted to advance and retreat the first movable member (12) to thereby effect mold opening and closing.

2. A mold-clamping apparatus (10) according to claim 1, wherein the linear motor (28) has an asymmetrical structure with respect to the mold-clamping-force transmission member (39).

3. A mold-clamping apparatus (10) according to claim 1 or 2, wherein the linear motor (28) is adapted to generate a thrust force which is applied to the first movable member (12).

4. A mold-clamping apparatus (10) according to any one of claims 1 to 3, wherein the linear motor (28) is adapted to be advanced and retreated while being guided by the guides (Gd) which are adapted to guide at least one of the first and second movable members (12, 22).

**Patentansprüche**

1. Formklemmvorrichtung (10), die Folgendes aufweist:

(a) ein erstes stationäres Glied (11) an dem eine stationäre Form (15) angebracht ist;

(b) ein zweites stationäres Glied (13), das gegenüberliegend dem ersten stationären Glied (11) angeordnet ist;

(c) ein erstes bewegbares Glied (12), das gegenüberliegend dem ersten stationären Glied (11) angeordnet ist und an dem eine bewegbare Form (16) angebracht ist;

(d) ein zweites bewegbares Glied (22), welches angepasst ist, um gemeinsam mit dem Vorschieben und Zurückziehen des ersten bewegbaren Glieds (12) vorgeschoben und zurückgezogen zu werden;

(e) einen Antriebsabschnitt zum Formklemmen (37), der ein Elektromagnet ist und angepasst ist, um eine Formklemmkraft zwischen dem zweiten stationären Glied (13) und dem zweiten bewegbaren Glied (22) zu erzeugen;

(f) ein Formklemmkraftübertragungsglied (39), das die ersten und zweiten bewegbaren Glieder verbindet, und

(g) einen Linearmotor (28), wobei der Linearmotor (28) zumindest einen Teil des Formklemmkraftübertragungsglieds (39) überlappt;

wobei die Formklemmvorrichtung, **dadurch gekennzeichnet ist, dass**:

der Linearmotor (28) einen Stator (29) aufweist, der auf einem Rahmen (FR) angeordnet ist, um sich parallel zu den Führungen (Gd) zu erstrecken, und

ein bewegbares Element (31) an dem unteren Ende des ersten bewegbaren Glieds (12) so angeordnet ist, dass es zu dem Stator (29) weist, wobei der Linearmotor (28) geeignet ist, um das erste bewegbare Glied (12) vorzuschieben und zurückzuziehen, um dadurch das Formöffnen und - schließen zu bewirken.

**2.** Formklemmvorrichtung (10) gemäß Anspruch 1, wobei der Linearmotor (28) einen asymmetrischen Aufbau in Bezug auf das Formklemmkraftübertragungsglied (39) besitzt.

**3.** Formklemmvorrichtung (10) gemäß Anspruch 1 oder 2, wobei der Linearmotor (28) geeignet ist, um eine Schubkraft zu erzeugen, die auf das erste bewegbare Glied (12) angewendet wird.

**4.** Formklemmvorrichtung (10) gemäß einem der Ansprüche 1 bis 3, wobei der Linearmotor (28) geeignet ist, um vorgeschoben und zurückgezogen zu werden, während er durch die Führungen (Gd) geführt wird, die geeignet sind, um zumindest eines der ersten und zweiten bewegbaren Glieder (12, 22) zu führen.

**Revendications**

**1.** Dispositif de serrage de moule (10) comprenant :

(a) un premier élément fixe (11) auquel un moule fixe (15) est fixé ;

(b) un second élément fixe (13) disposé en face du premier élément fixe (11) ;

(c) un premier élément mobile (12) disposé en face du premier élément fixe (11) et auquel un moule mobile (16) est fixé ;

(d) un second élément mobile (22) qui est adapté à être avancé et rétracté en association avec l'avancement et le retrait du premier élément mobile (12) ;

(e) une partie d'entrainement pour le serrage du moule (37) qui est un électro-aimant et qui est adaptée à produire une force de serrage de moule entre le second élément fixe (13) et le second élément mobile (22) ;

(f) un élément de transmission de force de serrage de moule (39) reliant les premier et second éléments mobiles ; et

(g) un moteur linéaire (28), le moteur linéaire (28) recouvrant au moins une partie de l'élément de transmission de force de serrage de moule (39) ;

le dispositif de serrage de moule étant **caractérisé en ce que** :

le moteur linéaire (28) comprend un stator (29) disposé sur un châssis (FR) de façon à s'étendre parallèlement à des guides (Gd) et un élément mobile (31) disposé à l'extrémité inférieure du premier élément mobile (12) pour faire face au stator (29), le moteur linéaire (28) étant adapté à avancer et à rétracter le premier élément mobile (12) pour effectuer ainsi l'ouverture et la fermeture du moule.

**2.** Dispositif de serrage de moule (10) selon la revendication 1, dans lequel le moteur linéaire (28) a une structure asymétrique par rapport à l'élément de transmission de force de serrage de moule (39).

**3.** Dispositif de serrage de moule (10) selon la revendication 1 ou 2, dans lequel le moteur linéaire (28) est adapté à produire une force de poussée qui est appliquée au premier élément mobile (12).

**4.** Dispositif de serrage de moule (10) selon l'une quelconque des revendications 1 à 3, dans lequel le moteur liénaire (28) est adapté à être avancé et rétracté tandis qu'il est guidé par les guides (Gd) qui sont adaptés à guider au moins l'un des premier et second éléments mobiles (12, 22).

# FIG. 1

EP 1 795 325 B1

# FIG. 2

EP 1 795 325 B1

# FIG. 3

# FIG. 4

# FIG. 5

EP 1 795 325 B1

# FIG. 6

EP 1 795 325 B1

# FIG. 7

EP 1 795 325 B1

# FIG. 8

EP 1 795 325 B1

# FIG. 9

# FIG. 10

# FIG.11

**EP 1 795 325 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3190600 B
- DE 3715161
- JP 61154822 A
- WO 0138069 A